# EUROPEAN PATENT APPLICATION

(11) **EP 3 112 674 A1**
(43) Date of publication of application: **04.01.2017**
(21) Application number: 15175057.7
(22) Date of filing: 02.07.2015
(51) Int. Cl.: F03D 3/00, F03D 3/02, F03D 13/20

(54) **A WIND TURBINE SYSTEM FOR GENERATING ELECTRICAL ENERGY ON A SHIP, AND A SHIP COMPRISING A WIND TURBINE SYSTEM**

(71) Applicant: Rotation Consultancy & Science Publications, 3818 VE Amersfoort (NL)
(72) Inventor: DE VRIES, Eize, 3818 VE Amersfoort (NL)
(74) Representative: De Vries & Metman

(57) **Abstract**

A wind turbine system (2) for generating electrical energy on a ship (1) comprises a frame (3), a supporting foot (4) for supporting the frame (3), at least two rotors (6) being rotatably mounted to the frame (3) and having respective axes of rotation (8) which extend in the same direction and at a distance from each other. Each rotor (6) has at least two airfoil blades (7) located at a distance from its axis of rotation (8) and extending in the same direction thereof. The distance between the rotors (6) is small and the rotors (6) are rotatable in opposite directions so as to maximize efficiency due to aerodynamic interaction between the rotors (6). The axes of rotation (8) have a horizontal orientation and lie at different height levels.

## Description

The present invention relates to a wind turbine system for generating electrical energy on a ship, comprising a frame, a supporting foot for supporting the frame, at least two rotors being rotatably mounted to the frame and having respective axes of rotation which extend in the same direction and at a distance from each other, each rotor having at least two airfoil blades located at a distance from its axis of rotation and extending in the same direction thereof, wherein the distance between the rotors is small and the rotors are rotatable in opposite directions so as to maximize efficiency due to aerodynamic interaction between the rotors.

Such a wind turbine system is known from US 6,784,566 and could be mounted on a ship for generating electrical energy. The known wind turbine system is a so-called vertical axis wind turbine (VAWT), such as a Darrieus wind turbine, and has two rotors including lift-generating elongate airfoil blades mounted on a vertical rotating shaft. Both rotors are in close proximity to each other and rotate in opposite directions. Their distance may be 0.5 m, for example. Due to these features a so-called coupled vortex effect is obtained. This phenomenon can be explained as being turbine induced vortex flow fields which interact with the uniform flow field of the oncoming wind resulting in a combined vortex/uniform flow field through the rotor. The combination of linear flow and vortex flow from the two rotors combine such that the efficiency of both rotors is increased. A disadvantage of the known wind turbine system is the height of the rotors, which in certain arrangements might require guy lines to keep it stable, hence making the application on a ship rather difficult.

A wind turbine system on a ship adds a renewable propulsion source to the main fossil fuel based propulsion system. For example when the ship moves against the wind the generated wind energy can be converted into electrical energy for driving an electric motor via a generator or generators which is/are drivably coupled to the propulsion system of the ship. It is known to apply Flettner rotors on a ship, but their operating principle is totally different from the present invention as the force output generates a direct forward propulsion force, which is strongly depending on the wind and sailing speeds and directions. Their height is disadvantageous in practice.

An object of the invention is to provide a wind turbine system, which is more suitable for a ship.

This object is accomplished with the wind turbine system according to the invention, which is characterized in that the axes of rotation have a horizontal orientation and lie at different height levels.

Because of the horizontal orientation of the axes of rotation the height level of the axis of rotation of the upper rotor can be relatively low such that the frame which supports the upper rotor at its axis of rotation can be relatively low, as well.

The frame must have a minimal height to support the upper rotor at its axis of rotation. For example, if the wind turbine system is mounted on a deck of a ship and the axes of rotation lie in a vertical plane, the distance between the deck and the axis of rotation of the upper rotor is approximately the sum of 1.5 times the diameter of one rotor, the distance between the rotors and the distance between the lower rotor and the deck. In case of a rotor diameter of 10 m and the distances between the rotors and between the lower rotor and the deck are both 1 m, the height of the upper axis of rotation is 17 m.

The length of the rotors, possibly plus a support structure plus a power transmission system, in longitudinal direction thereof may be relatively large, even longer than the width of the ship on which it can be mounted. If the rotors had a vertical orientation the frame should be able to support the rotors at the upper ends thereof, resulting in a relatively large height. Due to the horizontal orientation of the axes of rotation, guy lines for preventing the wind turbine system according to the invention from turning over may be omitted. It is noted that the distance between the rotation axes may be more than two and less than three times the distance between the rotation axis of one rotor and a blade thereof.

The wind turbine system according to the invention can be used for other marine applications than ships and for non-marine usage. Furthermore, if the wind turbine system is applied on a ship it can also be used for generating electrical energy for use ashore, for example when the ship is in a harbour.

It is also noted that the wind turbine system according to the invention may be a scalable modular design. It can be configured for specific applications such as ships having different dimensions or non-marine applications. A rotor may be composed of separate parts which are mounted to each other, for example by means of laminated or mechanical connections. Furthermore, composing the rotors from separate parts which are fixed to each other is particularly advantageous from manufacturing uniformity, product quality, assembly, scaling-related and assembly points of view.

In a practical embodiment the axes of rotation extend parallel to each other and lie in a common upwardly directed central plane. The central plane may extend vertically such that the axes of rotation lie exactly above each other. In that case the central plane can extend perpendicularly to the wind direction under operating conditions.

Preferably, the frame is rotatable with respect to the supporting foot about an upwardly directed yawing axis, since the wind turbine system can be directed into a desired orientation depending on the wind direction and forward direction and speed of a ship on which it is mounted.

The mutual position of the rotors with respect to the foot may be adjustable in order to be able to influence the actual airflow towards and through the rotors. This provides the opportunity to actively control the power output of the wind turbine system. More specifically the mutual position of the axes of rotation with respect to the foot may be adjustable in vertical and/or horizontal direction.

In a specific embodiment the frame is tiltable with respect to the foot about a tilting axis extending in the same direction as the axes of rotation. If the axes of rotation lie in an upwardly directed central plane the angle between wind direction and the central plane can be varied by means of tilting the frame. This means that the airflow through the aerodynamically coupled rotors can be adversely affected as a control strategy in order to maximize the power output of the wind turbine system at rated level like for instance 2MW. The tilting angle may vary between 0 and 10° clockwise or anticlockwise about the tilting axis, for example.

The blades may be either straight or curved in longitudinal direction thereof when the corresponding rotor is in its rest position. When the rotor rotates in accelerating mode the blades will bend due to the centrifugal force on the blades and return to their original shape during deceleration. If blades are already given a curvature during manufacturing, the blades displace between a lightly curved and a strongly curved shape. This has a positive effect on the structural design freedom and might allow eliminating a portion of a central shaft at the rotor for providing higher aerodynamic performance, and enhanced durability of the blade.

At least one of the rotors may have a central shaft to which each of the blades thereof is mounted via radially directed connecting arms which are located at a distance from each other in longitudinal direction of its axis of rotation.

In a preferred embodiment the central shaft is interrupted between the connecting arms, such that it comprises two separate central shaft sections which are mounted to each other via the connecting arms and the blades, since this has a positive effect on the aerodynamic performance of the rotor. By applying a non-continuous shaft at the inner side of the blades the efficiency of the wind turbine system can be optimized.

It is noted that the features regarding curved blades in rest position, non-continuous shaft and aerodynamically shaped connecting arms can be applied independently from each other and independently from the horizontal orientation of the axes of rotation. In other words the wind turbine system may comprise a frame, a supporting foot for supporting the frame, at least two rotors being rotatably mounted to the frame and having respective axes of rotation which extend in the same direction and at a distance from each other, each rotor having at least two airfoil blades located at a distance from its axis of rotation and extending in the same direction thereof, wherein the distance between the rotors is small and the rotors are rotatable in opposite directions so as to maximize efficiency due to aerodynamic interaction between the rotors, wherein either the blades are curved when the corresponding rotor is in its rest position, or at least one of the rotors has a central shaft to which each of the blades thereof is mounted via radially directed connecting arms which are located at a distance from each other in longitudinal direction of its axis of rotation and the central shaft is interrupted between the connecting arms, such that it comprises two separate central shaft sections which are mounted to each other via the connecting arms and the blades, or the connecting arms have aerodynamically optimized shapes.

For further improving the efficiency of the wind turbine system the connecting arms may have aerodynamically optimized shapes. For example, the connecting arms may have raindrop-shaped cross sections. For a smoother running of the entire wind turbine system the airfoils might be given an optimized spiral shape, for example. Such a design measure could be applied independently from the blade curvature.

The wind turbine system may be provided with either one or two electrical generators. In case of one generator a transmission system may couple both rotors to the generator and this may at least partly be located at one end of the rotors in longitudinal direction thereof. The generator or generators can be used to start-up the rotors, since an airfoil type Darrieus wind turbine is not always self-starting. This requires a dual-mode electric motor/generator system. It is also possible that the two rotors are coupled to two separate generators, possibly via a mechanical-hydraulic system with two gearboxes, multiple hydraulic pumps, hydraulic piping and one or more hydraulic motors plus matching electrical generators as described in EP 15168697.9 of the same applicant.

In a specific embodiment the rotors form a first pair of rotors and the wind turbine system comprises a second pair of rotors, wherein the first pair and second pair are disposed at opposite sides of the yawing axis. This provides the opportunity to support the rotors at the yawing axis such that a symmetrical system with centralized transmission system is obtained. It is possible to place two generators above each other at the yawing axis, whereas the upper rotors of both pairs of rotors are coupled to an upper generator and the lower rotors of both pairs of rotors are coupled to a lower generator.

The invention is also related to a ship, which comprises a wind turbine system as described hereinbefore.

The ship may comprise a hull and the wind turbine system may be movably mounted to the hull in order to be able to displace the wind turbine system in case of loading or unloading the ship, for example. It may be displaceable in longitudinal or transversal direction of the hull, for example.

The invention will hereafter be elucidated with reference to very schematic drawings showing an embodiment of the invention by way of example.
Fig. 1 is a side view of a ship including an embodiment of a wind turbine system according to the invention.
Fig. 2 is an enlarged perspective view of the wind turbine system as shown in Fig. 1.
Fig. 3 is a cross-sectional view of the wind turbine system as shown in Fig. 2.
Fig. 4 is a cross-sectional view of a rotor of an alternative embodiment of the wind turbine system, showing a rotor design with curved blades and winglets for enhanced output. These winglets can either be circular along the rotor circumference, for example a circular disk, or confined to the blade outer edges only.
Fig. 5 is a cross-sectional view of a connecting arm of the rotor of Fig. 4, showing its raindrop-shaped cross-section.

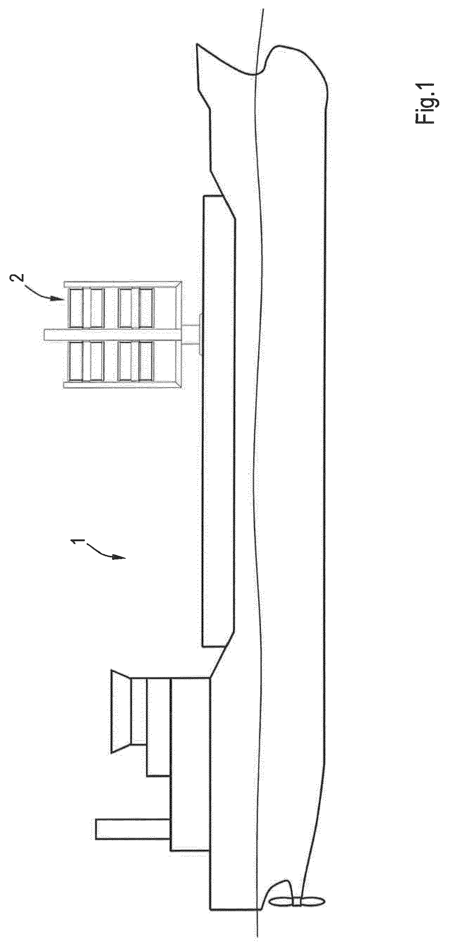

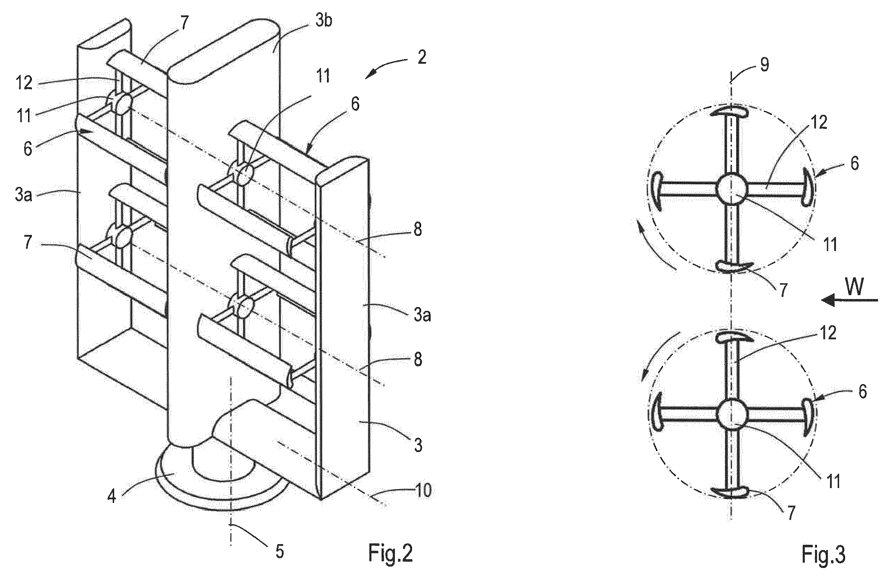

Fig. 1 shows a ship 1 which is provided with an embodiment of a wind turbine system 2 according to the invention. The wind turbine system 2 comprises electrical generators (not shown) which are coupled to propelling means of the ship 1 such that the wind turbine system 2 constitutes a renewable propulsion source for propelling the ship 1. Fig. 2 shows the wind turbine system 2 in more detail and Fig. 3 shows the wind turbine system 2 in cross-section along a vertical plane.

Referring to Fig. 2 the wind turbine system 1 comprises a frame 3 which is supported by a supporting foot 4. The frame 3 is rotatable with respect to the supporting foot 4 about a yawing axis 5 which extends vertically. The wind turbine system 2 comprises two pairs of rotors 6 which are disposed at opposite sides of the yawing axis 5. The four rotors 6 are rotatably mounted to the frame 3. Fig. 3 illustrates that under operating conditions the rotors 6 are counter-rotating. Furthermore, the vertical distance between the rotors 6 of each pair of rotors 6 is small. In Fig. 3 the wind direction is indicated by arrow W. Due to the short distance between the rotors 6 and their counter-rotating operation a relatively high aerodynamic efficiency can be achieved due to a phenomenon which is called coupled vortex interaction.

In the embodiment as shown in the figures each of the rotors 6 has four blades 7, but the number of blades 7 may be different in alternative embodiments. Each rotor 6 has an axis of rotation 8 which extends in horizontal direction. The blades 7 of each rotor 6 lie at a distance from the axis of rotation 8 of the rotor 6. Fig. 3 shows that the axes of rotation 8 of one pair of rotors 8 extend parallel to each other and lie in a common central plane 9, which extends vertically in this case. In the embodiment as shown in Fig. 2 the pair of rotors 6 at one side of the yawing axis 5 are the same as at the opposite side thereof and the axes of rotation 8 of the rotors 6 at the upper side and at the lower side coincide, respectively.

The frame 3 is tiltable with respect to the foot 4 about a tilting axis 10. The tilting axis 10 extends parallel to the axes of rotation 8. In this case the tilting axis 10 lies in the central plane 9 and is defined by a pivot (not shown) between the frame 3 and the foot 4 or at an alternative pivot axis. This provides the opportunity to adjust the mutual position of the rotors 6 with respect to the foot 4 such that under operating conditions the angle between the wind direction W and the central plane 9 can be changed. This causes a change in aerodynamic efficiency of the wind turbine system 2, which phenomenon can be used for controlling its generated power including high-wind cut-out mode. It also serves as an operational safety and fail-safe strategy measure in case of a system emergency situation, mechanical/hydraulical or electrical failure, or otherwise with the rotors 6 running out of control. It is also possible to influence the aerodynamic efficiency and projected area to the prevailing wind direction and thus controlling output by turning the frame 3 about the yawing axis 5. In practice the combination of yaw control, by rotation of the frame 3 about the yawing axis 5, and the rotor tilting control, by tilting the frame 3 about the tilting axis 10, can be used for providing fast, accurate and reliable power output control. The systems together provide two independent operating safety solutions with built-in redundancy as well. Above cut-out wind speeds, for example 30m/s, the rotors 6 will be stopped and the frame is turned to an angle with respect to the prevailing wind direction and ship moving speed and direction that gives minimal wind force exposure. In an alternative embodiment (not shown) one or both of the axes of rotation may be adjustable in vertical and/or horizontal direction. During loading and unloading the ship the wind turbine system 2 can be moved sideways and/or along the ship's longitudinal axis into a safe position. During this safe non-operating position the upper rotors 6 can be turned down and positioned behind the lower rotors 6. This position minimizes the vertical exposed height of the system 2, reduces the risk of mechanical damages and makes loading and unloading operations easier.

In the embodiment as shown in Fig. 2 each of the rotors 6 is provided with a central shaft 11 to which the blades 6 are mounted. The central shaft 11 of each rotor 6 comprises two sections which are each rotatably mounted to the frame 3. The central shaft 11 is not a continuous shaft, but interrupted in order to eliminate airflow disturbances and interlinked efficiency loss caused by the centre of the rotor 6. The blades 7 are mounted to the sections of the central shaft 11 by means of connecting arms 12. An additional centralized reinforcement structure in the rotors, for example integrated along the longitudinal axes of the respective rotors, is possible, but not shown in the figures. In the embodiment as shown in Fig. 2 the connecting arms 12 of each rotor 6 lie in respective common planes which extend perpendicularly to the corresponding axis of rotation 8, but alternative orientations are conceivable. The connecting arms 12 have raindrop-shaped cross-sections in order to achieve aerodynamically optimized shapes and minimize drag-related airflow disturbances causing aerodynamic efficiency losses inside the rotor 6.

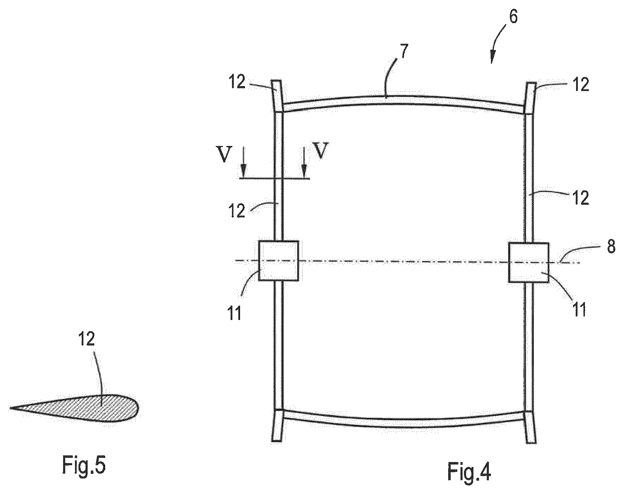

The elongate blades 7 have a longitudinal direction which is directed in the same direction as the axis of rotation 8 of the corresponding rotor 6. In the embodiment as shown in Fig. 2 the blades 7 are more or less straight and extend parallel to the respective axes of rotation 8. Fig. 4 shows an alternative rotor 6 which has curved blades 7 when the rotor 6 is at rest. When a cross-sectional view is taken in longitudinal direction of the blade, as shown in Fig. 4, each blade 7 has a convex outer side, such that a centre portion of the blade 7 has a larger distance from the axis of rotation 8 than the opposite end portions which are mounted to the connecting arms 12. At the opposite ends of each blade 7 individual or circular winglets 12 are provided. Fig. 5 illustrates that the connecting arms 12 have raindrop-shaped cross-sections.

Fig. 2 shows that the frame 3 has two outer columns 3a remote from the yawing axis 5 which support sections of respective central shafts 11 and a central column 3b which supports the opposite sections of the respective central shafts 11. The central column 3b also forms a housing which accommodates two electrical generators and further transmission components/systems (not shown). The generators are drivably coupled to the respective central shafts 11 of the upper and lower rotors 6. The transmission may be a gear transmission, but alternative transmission types like a drive belt or hydraulic transmission are also conceivable. The location of the electrical generators and the transmission at the central column 3b is advantageous since the weight is concentrated at the yawing axis 5, hence allowing a compact transmission housing suitable for protecting components under marine conditions, easing upkeep, and minimizing rotational inertia.

As shown in Fig. 1 the wind turbine system 2 can be located at the front side of the ship 1 or alternatively at the rear side above the steering housing or somewhere in between. The foot 4 may be fixed to the hull of the ship 1, but it is also possible that the foot 4 is displaceable with respect to the hull such that the wind turbine system 2 can be moved to a position where it does not form an obstacle, for example during loading and unloading the ship 1. In practice the foot may be placed on a rail or other fixing/guiding system in order to displace the wind turbine system in an easy manner.

The wind turbine system 2 is also provided with a mechanical or other braking system (not shown) for bringing the wind turbine system to a safe stop or safe operating mode in a short period of time automatically in the event of a problem with the system.

In an alternative embodiment (not shown) the wind turbine system 2 may have a pivoting axis which extends upwardly between the respective pairs of rotors 2 at both sides of the yawing axis 5, such that the pairs of rotors 2 can be turned towards each other to form a V-shape as seen from above. The pivoting axis may coincide with the yawing axis 5 or extend parallel to the yawing axis 5 at the central column 3b. This means that the central shafts 11 require a transmission which allows such a movement, for example a universal joint or a homokinetic joint.

From the foregoing, it will be clear that the invention provides a lift-generating wind turbine system which is suitable for installing on a ship.

The invention is not limited to the embodiment shown in the drawings and described hereinbefore, which may be varied in different manners and alternative marine and non-marine applications within the scope of the claims and their technical equivalents. Furthermore, a ship may be provided with more than one wind turbine system.

## Claims

1. A wind turbine system (2) for generating electrical energy on a ship (1), comprising a frame (3), a supporting foot (4) for supporting the frame (3), at least two rotors (6) being rotatably mounted to the frame (3) and having respective axes of rotation (8) which extend in the same direction and at a distance from each other, each rotor (6) having at least two airfoil blades (7) located at a distance from its axis of rotation (8) and extending in the same direction thereof, wherein the distance between the rotors (6) is small and the rotors (6) are rotatable in opposite directions so as to maximize efficiency due to aerodynamic interaction between the rotors (6) **characterized in that** the axes of rotation (8) have a horizontal orientation and lie at different height levels.

2. A wind turbine system (2) according to claim 1,
wherein the axes of rotation (8) extend parallel to each other and lie in a common upwardly directed central plane (9).

3. A wind turbine system (2) according to claim 1 or 2, wherein the frame (3) is rotatable with respect to the supporting foot (4) about an upwardly directed yawing axis (5).

4. A wind turbine system (2) according to one of the preceding claims, wherein the mutual position of the rotors (6) with respect to the foot (4) is adjustable.

5. A wind turbine system (2) according to one of the preceding claims, wherein the mutual position of the axes of rotation (8) with respect to the foot (4) is adjustable in vertical and/or horizontal direction.

6. A wind turbine system (2) according to one of the preceding claims, wherein the frame (3) is tiltable with respect to the foot (4) about a tilting axis (10) extending in the same direction as the axes of rotation (8).

7. A wind turbine (2) system according to one of the preceding claims, wherein the blades (7) are curved in longitudinal direction thereof when the corresponding rotor (6) is in its rest position.

8. A wind turbine system (2) according to one of the preceding claims, wherein at least one of the rotors (6) has a central shaft (11) to which each of the blades (7) thereof is mounted via radially directed connecting arms (12) which are located at a distance from each other in longitudinal direction of its axis of rotation (8).

9. A wind turbine system (2) according to claim 8, wherein the central shaft (11) is interrupted between the connecting arms (12), such that it comprises two separate central shaft sections which are mounted to each other via the connecting arms (12) and the blades (7).

10. A wind turbine system (2) according to claim 8 or 9, wherein the connecting arms (12) have aerodynamically optimized shapes.

11. A wind turbine system (2) according to claim 10, wherein the connecting arms (12) have raindrop-shaped cross sections.

12. A wind turbine system (2) according to one of the preceding claims, wherein the system (2) is provided with an electrical generator which is drivably coupled to both rotors (6) via a transmission which is at least partly located at one end of the rotors (6) in longitudinal direction thereof.

13. A wind turbine system (2) according to one of the preceding claims and claim 3, wherein the rotors (6) form a first pair of rotors and wherein the wind turbine system comprises a second pair of rotors (6), wherein the first pair and second pair are disposed at opposite sides of the yawing axis (5).

14. A ship (1), comprising a wind turbine system (2) according to one of the preceding claims.

15. A ship (1) according to claim 14, wherein the ship (1) comprises a hull and the wind turbine system (2) is movably mounted to the hull.
